# EUROPEAN PATENT SPECIFICATION

(11) **EP 4 306 397 B1**
(45) Date of publication and mention of the grant of the patent: **26.11.2025**
(21) Application number: 22767073.4
(22) Date of filing: 07.03.2022
(51) Int. Cl.: B62K 17/00, B62J 7/00, B62J 9/23, B62J 43/10, B62K 5/027, B62K 5/10, B62K 15/00

(54) **VEHICLE**
FAHRZEUG
VÉHICULE

(30) Priority: 12.03.2021 JP 2021040729
(43) Date of publication of application: 17.01.2024
(73) Proprietor: HONDA MOTOR CO., LTD., Tokyo 105-8404 (JP)
(72) Inventor: MORI Yotaro, Tokyo 107-8556 (JP)
(74) Representative: Weickmann & Weickmann PartmbB
(86) International application number: PCT/JP2022/009659
(87) International publication number: WO 2022/191117

(56) References cited:
- CN-A- 104 417 690
- CN-U- 206 914 562
- CN-U- 210 310 726
- DE-A1- 3 206 854
- JP-A- 2002 320 702
- JP-A- 2011 177 422
- JP-A- 2019 189 053
- JP-A- H08 207 851
- JP-U- S5 858 991
- JP-U- S60 119 686
- KR-A- 20170 027 099
- US-A- 5 036 938
- US-A- 5 265 695
- US-A1- 2018 072 366
- US-A1- 2019 367 116
- US-B2- 8 801 010

## Description

### TECHNICAL FIELD

This invention relates to a foldable vehicle including a front wheel and rear wheels.

### BACKGROUND ART

As a vehicle of this type, conventionally, there is a known electrically powered three-wheeled vehicle having a single wheel disposed on one of front and rear sides and a pair of left and right rear wheels disposed on the other of the front and rear sides (for example, see JP 2019-59445 A). In the vehicle described in JP 2019-59445 A, the wheels are rotatably supported at the tips of a pair of support mechanisms rotatably connected to each other via a support shaft, and a battery is supported by the support mechanism between the support shaft and the wheel.

JP 2019 189053 A discloses a vehicle including front wheel and rear wheels in a configuration wherein a swing arm and a pivot plate are rotatably connected around a pivot axis.

CN 206 914 562 U discloses a holding part of a battery provided at the front end of a vehicle.

US 2018/072366 A1 and DE 32 06 854 A1 disclose a connecting portion rotatably connecting first and second frames in the up-down direction.

### DISCLOSURE OF INVENTION

### PROBLEMS TO BE SOLVED BY THE INVENTION

The vehicle described in JP 2019-59445 A is carried while being inclined in a folded state. However, a moment due to a gravity of the battery in carrying the vehicle tends to increase, and there is a problem in transportability of the vehicle.

### MEANS FOR SOLVING PROBLEM

The present invention provides a foldable vehicle according to claim 1.

### EFFECT OF THE INVENTION

According to the present invention, it is possible to easily carry a vehicle in a folded state.

### BRIEF DESCRIPTION OF THE DRAWINGS

FIG. 1 is a side view illustrating an overall configuration of a vehicle according to an embodiment of the present invention;
FIG. 2 is a plan view illustrating the overall configuration of the vehicle according to the embodiment of the present invention;
FIG. 3 is a plan view illustrating the vehicle in which a part in FIG. 2 is omitted;
FIG. 4 is a cross-sectional view taken along line IV-IV of FIG. 3;
FIG. 5 is a three-view drawing of a battery mounted on the vehicle according to the embodiment of the present invention;
FIG. 6 is a view illustrating an example of an operation when the battery is attached and detached in the vehicle of FIG. 1;
FIG. 7 is a cross-sectional view taken along line VII-VII of FIG. 1;
FIG. 8 is a view schematically illustrating a state seen from behind of the vehicle according to the embodiment of the present invention;
FIG. 9A is a view illustrating an operation of a posture change of the vehicle according to the embodiment of the present invention;
FIG. 9B is a view illustrating an operation of the posture change of the vehicle according to the embodiment of the present invention and illustrating an operation following the operation in FIG. 9A;
FIG. 9C is a view illustrating an operation of the posture change of the vehicle according to the embodiment of the present invention and illustrating an operation following the operation in FIG. 9B;
FIG. 9D is a view illustrating an operation of the posture change of the vehicle according to the embodiment of the present invention and illustrating an operation following the operation in FIG. 9C;
FIG. 10 is a view illustrating an operation when the battery is removed, in a stored state of the vehicle according to the embodiment of the present invention;
FIG. 11 is a view illustrating an operation when charging the battery;
FIG. 12 is a view illustrating a modification of FIG. 1;
FIG. 13 is a view illustrating a modification of FIG. 2;
FIG. 14A is a view illustrating an operation of a posture change of the vehicle according to the modification;
FIG. 14B is a view illustrating an operation following the operation in FIG. 14A; and
FIG. 14C is a view illustrating an operation following the operation in FIG. 14B.

### DESCRIPTION OF EMBODIMENT

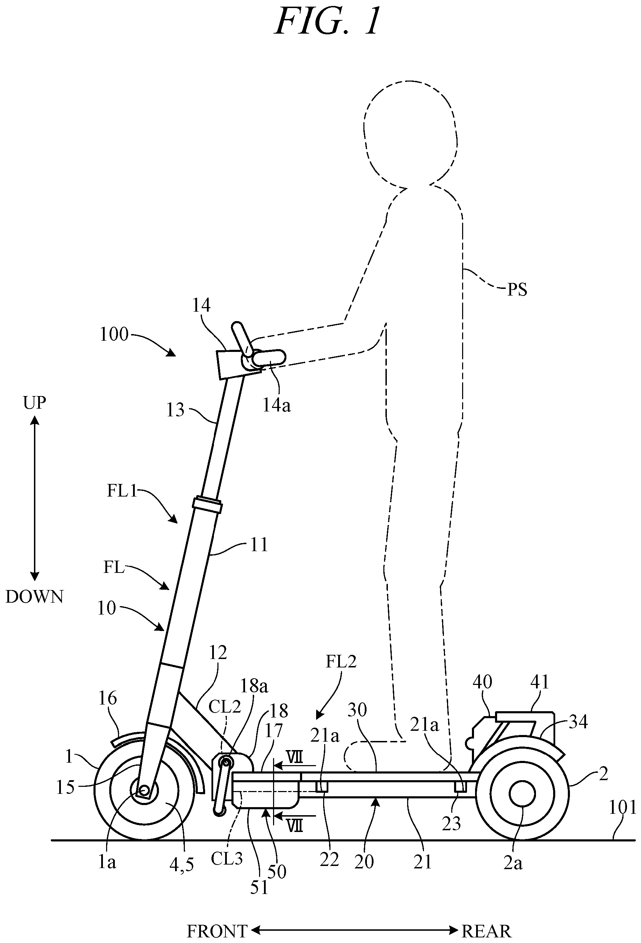

Now, an embodiment of the present invention will be described with reference to FIGs. 1 to 14C. A vehicle according to the embodiment of the present invention is a three-wheeled vehicle including a single front wheel and a pair of left and right rear wheels, and is formed such that a user can ride in a standing posture.

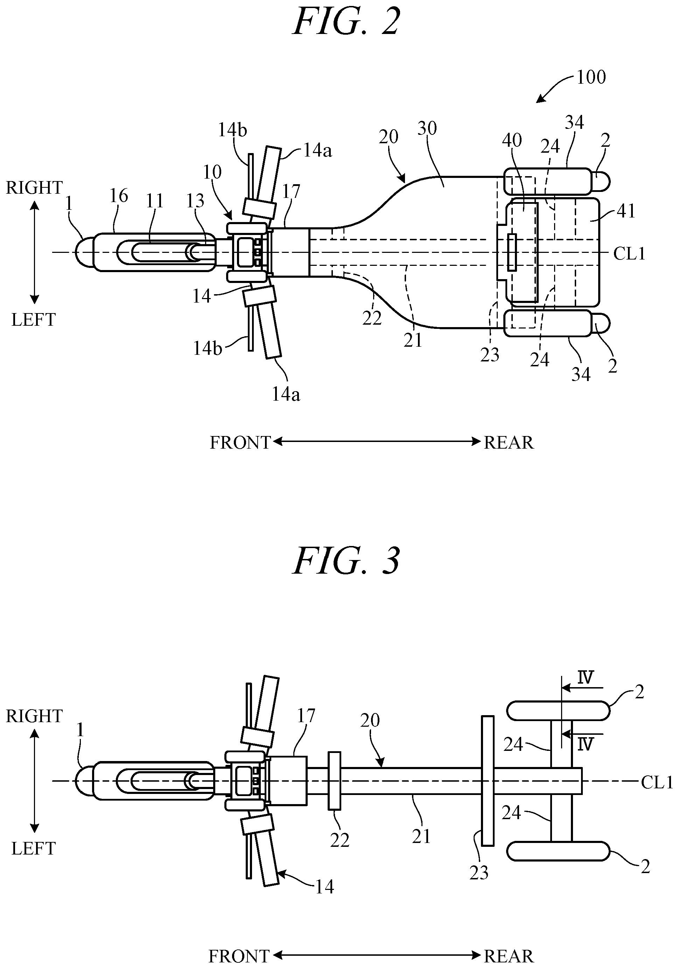

FIG. 1 and FIG. 2 are a side view and a plan view illustrating an overall configuration of a vehicle 100 according to the embodiment of the present invention, respectively, and show a traveling posture of the vehicle 100 when the vehicle is used, that is, a travelable posture. A non-traveling posture is referred to as a non-traveling posture. FIG. 1 also illustrates a use state of a user PS (two-dot chain line). Hereinafter, the front-rear direction (length direction), the left-right direction (width direction), and the up-down direction (height direction) of the vehicle 100 are defined as illustrated, and a configuration of each unit will be described according to this definition. FIG. 1 is a view of the vehicle 100 seen from the left, and FIG. 2 is a view of the vehicle 100 seen from above.

As illustrated in FIGs. 1 and 2, the vehicle 100 includes a front wheel 1 and rear wheels 2, and a frame FL included in a skeleton of the vehicle 100, and is entirely symmetric with respect to a center line CL1 (FIG. 2) passing through the center of the vehicle 100 in the left-right direction. More specifically, the front wheel 1 is arranged along the center line CL1, and the left and right rear wheels 2 are arranged at symmetrical positions across the center line CL1. The front wheel 1 has the same diameter as the rear wheels 2. The front wheel 1 may have a larger diameter or a smaller diameter than the rear wheels 2. The frame FL includes a front frame 10 and a rear frame 20.

The front frame 10 includes a vertical pipe 11 having a substantially rectangular cross section extending in the up-down direction and an inclined frame 12 extending rearward from the rear surface of the lower end portion of the vertical pipe 11. The vertical pipe 11 is inclined so that the upper end portion thereof is located rearward of the lower end portion thereof. More specifically, the inclined frame 12 is inclined so that the rear end portion thereof is located below the upper end of the front wheel 1 and the front end portion thereof is located above the upper end of the front wheel 1, and the front end portion of the inclined frame 12 is joined to the rear surface of the vertical pipe 11.

A through hole having a substantially cylindrical cross section is formed in the vertical pipe 11 over the up-down direction, and a handlebar shaft 13 having a substantially circular cross section is rotatably inserted into the through hole. The center portion of a handlebar 14 in the left-right direction is fixed to the upper end portion of the handlebar shaft 13, and a front fork 15 is fixed to the lower end portion of the handlebar shaft 13. The handlebar shaft 13 is supported so as to be movable vertically (expandable and contractible) with respect to the vertical pipe 11. Although not illustrated, a locking mechanism for fixing the height of the handlebar shaft 13 is provided at the upper end portion of the vertical pipe 11.

A rotary shaft 1a of the front wheel 1 is rotatably supported by the pair of left and right front forks 15. The front wheel 1 is steered by a turning operation (steering) of the handlebar 14. The handlebar 14 is a bar handle that extends substantially linearly in the left-right direction. A plastic or rubber grips 14a gripped by the user PS are provided at both left and right ends of the handlebar 14. A substantially arc-shaped front fender 16 is attached to the inner side of the pair of left and right front forks 15 so as to cover the periphery of the front wheel 1 from the upper side to the rear side of the front wheel 1.

Although not illustrated in detail, a traveling motor 4 (in-wheel motor) and a brake unit 5 are housed inside the front wheel 1. For example, the traveling motor 4 is arranged on the left side, and the brake unit 5 is arranged on the right side. The vehicle 100 is formed as an electric vehicle that travels by driving of the traveling motor 4. The brake unit 5 is formed as, for example, a drum brake unit included in a drum brake. Although not illustrated, the rear wheels 2 are similarly provided with the brake units. These brake units 5 are operated by an operation of brake levers 14b provided in front of the grips 14a of the handlebar 14, and a braking force is applied to the front wheel 1 and the rear wheels 2. The traveling motor 4 as an electric motor may be provided in the rear wheels 2 instead of the front wheel 1, or in both the front wheel 1 and the rear wheels 2. When the traveling motors are provided in both the front wheel 1 and the rear wheels 2, the towing ability and the climbing ability of the vehicle 100 can be improved.

Although not illustrated, the handlebar 14 is provided with a starter switch to instruct on/off of a main power supply, a blinker switch to notify of right/left turning, an accelerator lever to input a traveling command, and the like so as to be operable by the user. A display unit that displays vehicle information such as a remaining battery capacity and a set vehicle speed can also be provided at the handlebar 14. Below the handlebar 14, a pair of left and right blinker lamps that blink in response to an operation of the blinker switch is provided. A headlight is provided at the upper end portion of the vertical pipe 11.

The rear frame 20 includes a step 30 on which feet of the user PS are placed in the traveling position of the vehicle 100. A battery 40 is disposed behind the step 30. FIG. 3 is a plan view illustrating an overall configuration of the vehicle 100 in which the step 30 and the battery 40 are omitted. As illustrated in FIG. 3, the rear frame 20 includes a main frame 21 having a substantially rectangular cross section or a substantially circular cross section extending in the front-rear direction along the center line CL1, a pair of front and rear lateral frames 22 and 23 having a substantially rectangular cross section extending in the left-right direction across the main frame 21, and a pair of left and right support frames 24 extending in the left-right direction from the rear end portion of the main frame 21. These frames 21 to 24 are indicated by dotted lines in FIG. 2.

As illustrated in FIG. 1, on the upper surface of the main frame 21, two recessed portions 21a are formed in the left-right direction at front and rear portions thereof, and the lateral frames 22 and 23 are fitted into the recessed portions 21a and joined to the recessed portions 21a. As illustrated in FIG. 3, the length of the lateral frame 23 in the left-right direction is longer than the length of the lateral frame 22 in the left-right direction and is shorter than the distance between the left and right rear wheels 2. The upper surfaces of the lateral frames 22 and 23 are located on the same horizontal plane parallel to the road surface 101 (FIG. 1) and above the upper surface of the main frame 21. The upper surfaces of the lateral frames 22 and 23 may be located on the same plane as the upper surface of the main frame 21. The pair of left and right support frames 24 protrude from the left and right side surfaces of the main frame 21 in the left-right direction. A single support frame 24 may be provided so as to pass through the main frame 21.

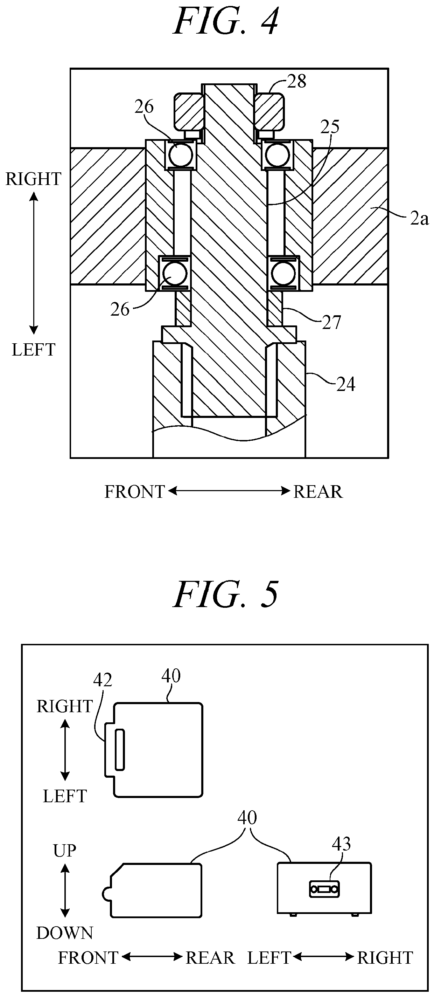

FIG. 4 is a cross sectional view illustrating a configuration of a mounting portion of the rear wheel 2, that is, a cross sectional view taken along line IV-IV of FIG. 3. As illustrated in FIG. 4, a shaft 25 is attached to a distal end portion of the support frame 24. A wheel 2a of the rear wheel 2 is rotatably supported on the shaft 25 via a pair of left and right bearings 26. A collar 27 having a substantially cylindrical shape is interposed between the support frame 24 and the bearing 26. A nut 28 is screwed to the distal end portion of the shaft 25 so as to restrain positions of the bearings 26.

As illustrated in FIG. 1, the front frame 10 further includes a base frame 17 behind the inclined frame 12. As illustrated in FIG. 2, the base frame 17 is a plate-like member having a substantially rectangular shape in a plan view, and the step 30 is disposed behind the base frame 17. The width (length in the left-right direction) of the base frame 17 is substantially equal to the width of the lateral frame 22. As illustrated in FIG. 1, a bracket 18 protruding upward and forward from the base frame 17 is provided at the front end portion of the base frame 17.

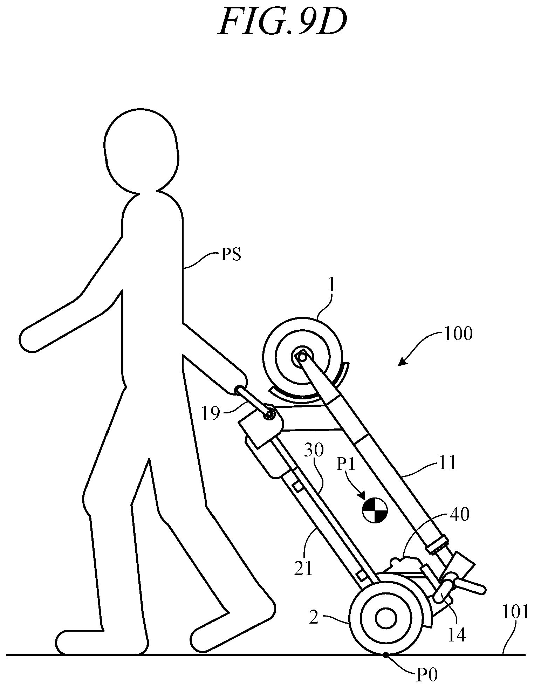

The rear end portion of the inclined frame 12 is rotatably supported at the bracket 18 around a shaft portion 18a (an axial line CL2) extending in the left-right direction. As a result, the vehicle 100 can be folded, and the vehicle 100 can be easily carried in the folded condition (see FIG. 9D). In the following, a frame in front of the axial line CL2, that is, a part other than the base frame 17 of the front frame 10 may be referred as a first frame FL1, and a frame behind the axial line CL2, that is, the base frame 17 and the rear frame 20 together may be referred as a second frame FL2. Although not illustrated, the bracket 18 is provided with a locking mechanism that prevent the inclined frame 12 from rotating about the axial line CL2. Therefore, the vehicle 100 can be held in the traveling posture of FIG. 1.

The step 30 is supported by the second frame FL2. More specifically, as illustrated in FIGs. 1 and 2, the step (footrest) 30, which is a plate member having a substantially rectangular shape in a plan view and extends in the front-rear direction and the left-right direction, is mounted on the upper surfaces of the lateral frames 22 and 23. The step 30 is fixed to the lateral frames 22 and 23 by welding or the like, whereby both ends of the step 30 in the front-rear direction are supported by the lateral frames 22 and 23. The step 30 may also be mounted on the upper surface of the main frame 21, and the step 30 may be supported by the main frame 21 and the lateral frames 22 and 23. The step 30 functions as a placement part on which both feet of the user PS in a standing posture are placed. The upper surface (a placement surface) of step 30 is configured as a horizontal surface that is parallel to the road surface 101.

A pair of left and right rear fenders 34 are attached to the rear end portion of the step 30. The rear fender 34 is formed in a substantially arc shape so as to cover the circumference of the rear wheel 2 from the front side to the upper side and the rear side of the rear wheel 2. The length from the right end face of the right rear fender 34 to the left end face of the left rear fender 34 is shorter than the length from the right end portion to the left end portion of the handlebar 14, and the maximum width of the vehicle 100 is defined by the handlebar 14.

A holder 41 of the battery 40 is disposed on a rear side of the step 30. The holder 41 is formed in a substantially box shape with an opened front surface. An accommodation space in which the battery 40 is accommodated is formed in the holder 41. More specifically, the holder 41 includes a bottom wall and a top wall facing each other and extending in a substantially horizontal direction, and a pair of left and right side walls and a rear wall standing upright between the bottom walls and the top wall. The bottom wall is mounted and supported on the upper surface of the rear end portion of the main frame 21 and the upper surface of the support frame 24.

FIG. 5 is a three-view drawing illustrating a configuration of the battery 40. The front-rear direction, the left-right direction, and the up-down direction in the drawing correspond to directions in a state in which the battery 40 is mounted in the traveling posture of the vehicle 100 (FIG. 1). As illustrated in FIG. 5, the entire battery 40 is formed in a substantially box shape. More specifically, it is formed in a substantially flat shape having a length (width) in the left-right direction longer than a length (height) in the up-down direction. A handle 42 operated when the battery 40 is attached and detached is provided at a front end portion of the battery 40, and a terminal 43 is provided at a rear end portion of the battery 40.

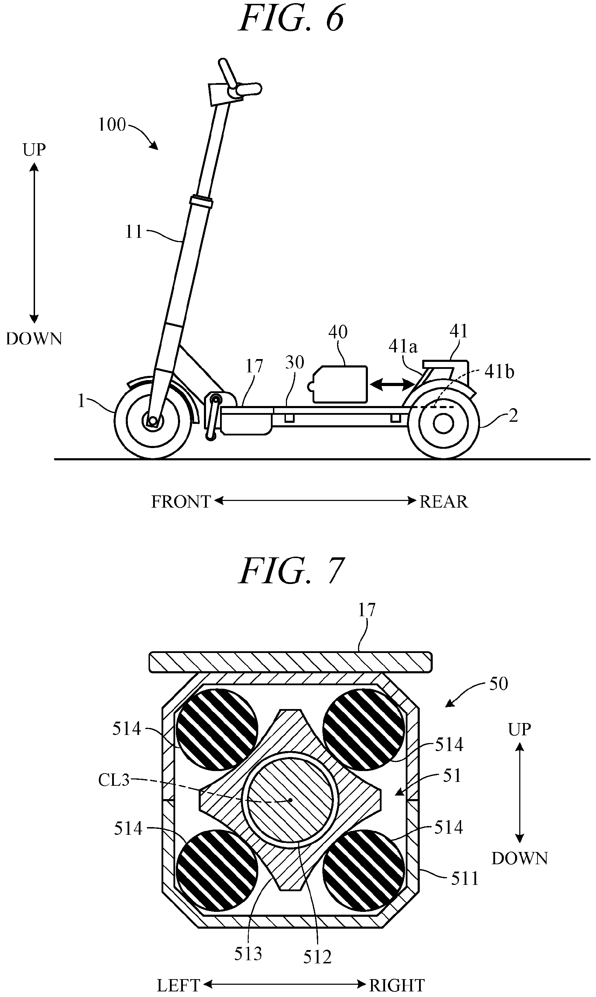

FIG. 6 is a side view in the traveling posture of the vehicle 100 illustrating an operation when the battery 40 is attached and detached (when inserted and removed). As illustrated in FIG. 6, the substantially box-shaped battery 40 is inserted into the holder 41 through the substantially rectangular opening 41a on the front surface, and thereby the battery 40 is supported. Although not illustrated, the holder 41 is provided with a locking mechanism for holding the battery 40 in an accommodated state. The upper surface (dotted line) of the bottom wall is formed to have a substantially identical height to that of the upper surface of the step 30. Therefore, as illustrated by an arrow in FIG. 6, it is possible to easily accommodate (insert) the battery 40 in the holder 41 or easily remove (separate) the battery 40 from the holder 41, while sliding the battery 40 in the front-rear direction along the upper surface of the step 30. Although not illustrated, a terminal is provided on the rear wall of the holder 41, and the terminal 43 of the battery 40 is connected to such a terminal, in the accommodated state of the battery 40.

The battery 40 is a secondary battery such as a lithium ion battery in which electric power supplied to the traveling motor 4 is stored, and the battery 40 is connected to the traveling motor 4 provided at the front wheel 1 via the terminal on the rear wall of the holder 41 and a power line passing through the main frame 21. Electric power supplied from the battery 40 to the traveling motor 4 is controlled by a power control unit (not illustrated).

As illustrated in FIG. 1, the front frame 10 and the rear frame 20 are connected via a swing portion 50. That is, the base frame 17 provided at the rear end portion of the front frame 10 and the main frame 21 provided at the front end portion of the rear frame 20 are connected to each other via the swing portion 50 so as to be swingable in the left-right direction. The swing portion 50 includes a Neidhart rubber spring 51 fixed to a bottom surface of the base frame 17.

FIG. 7 is a view illustrating a schematic configuration of the Neidhart rubber spring 51 provided in the swing portion 50 (a cross sectional view taken along line VII-VII of FIG. 1). As illustrated in FIG. 7, the Neidhart rubber spring 51 is incorporated in a case 511 having a substantially rectangular frame shape in a cross section and fixed to the bottom surface of the base frame 17. In the case 511, a shaft 512 which is provided integrally with the main frame 21 of the rear frame 20 and has a substantially circular cross section extending along the axial line CL3, is disposed. The front end portion of the main frame 21 may be configured to have a substantially cylindrical cross section, and this may be used as the shaft 512. The Neidhart rubber spring 51 includes a substantially rhombic cam block 513 spline-connected to the shaft 512 so as to be rotatable integrally with the shaft 512, and rubber rollers 514 disposed opposite to surfaces formed in a concave shape of the cam block 513. FIG. 7 corresponds to an initial state before swinging at the swing portion 50.

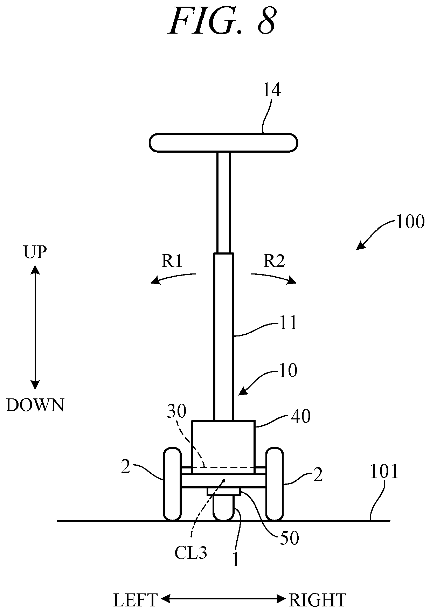

FIG. 8 is a view of the vehicle 100 seen from behind, and is a view corresponding to the initial state before swinging. FIG. 8 illustrates a configuration of the vehicle 100 in a simple manner. As illustrated in FIG. 8, in the initial state, the vertical pipe 11 extends substantially perpendicularly to the road surface 101. The posture of the vehicle 100 in this case is referred to as a reference posture.

When torque acts on the case 511 of the swing portion 50 in FIG. 7 from this initial state and the case 511 rotates about the axial line CL3, the rubber roller 514 is pressed and elastically deformed between the case 511 and the cam block 513, and the rubber roller 514 becomes elliptical. At this time, the front frame 10 shown in FIG. 8 swings in the left-right direction (arrow R1 or R2 direction) with respect to the step 30 around the axial line CL3, and the vertical pipe 11 is inclined with respect to the road surface 101. As a result, the vehicle 100 takes an inclined posture. In this case, as a rotation angle of the case 511 around the axial line CL3 increases, a rotational resistance to the case 511 increases. When the torque acting on the case 511 becomes zero, the rubber roller 514 returns to the original shape by the elastic force, and the front frame 10 returns to the reference posture in FIG. 8.

As described above, by providing the front frame 10 so as to be swingable via the swing portion 50, the user PS riding on the vehicle 100 in a standing posture can easily turn the vehicle 100 in the left-right direction. For example, when turning the vehicle 100 in the left-right direction, the user slightly bends the knees and the ankles and inclines the upper body to the left or right. As a result, the vertical pipe 11 can be swung together with the base frame 17 in a stable posture with both feet placed on the step 30 while the step 30 integrated with the rear frame 20 is kept horizontal, and the front wheel 1 can be inclined to the left and right. As a result, the vehicle 100 can be smoothly turned, and the turning performance is improved.

In addition, since the Neidhart rubber spring 51 is provided in the swing portion 50, when the front frame 10 is swung to the left and right from the reference posture, a restoring force acts on the front frame 10, and swinging of the front frame 10 can be favorably suppressed. The cam block 513 may be formed not in a quadrangular shape but in another polygonal shape (for example, a triangular shape). Instead of forming all surfaces of the cam block 513 in a concave shape, for example, two surfaces may be formed in a concave shape, and the rubber rollers 514 may be disposed to face these concave surfaces. The restoring force may be acted on the front frame 10 by using an elastic member such as a coil spring instead of the Neidhart rubber spring 51. That is, the configuration of a damper member is not limited to the Neidhart rubber spring 51. Further, since the battery 40 is supported by the holder 41 mounted on the main frame 21 and the support frame 24 as a non-swinging member, a moment caused by a gravity of the battery 40 does not act in the swinging direction, so that it is possible to suppress the falling of the vehicle 100 during swinging.

Although not illustrated, a load point (a center point of a load acting from a sole) acting on the step 30 by a weight of the user in a standing posture is located in a triangular region connecting a grounding point of the front wheel 1 and the grounding points of the pair of left and right rear wheels 2 in a plan view. Thus, the user can ride on the vehicle 100 in a stable posture during both traveling and stopping. Since the battery 40, which is a heavy object, is disposed between the left and right rear wheels 2, a center of gravity of the vehicle 100 becomes low, and the attitude at the time of parking is more stable.

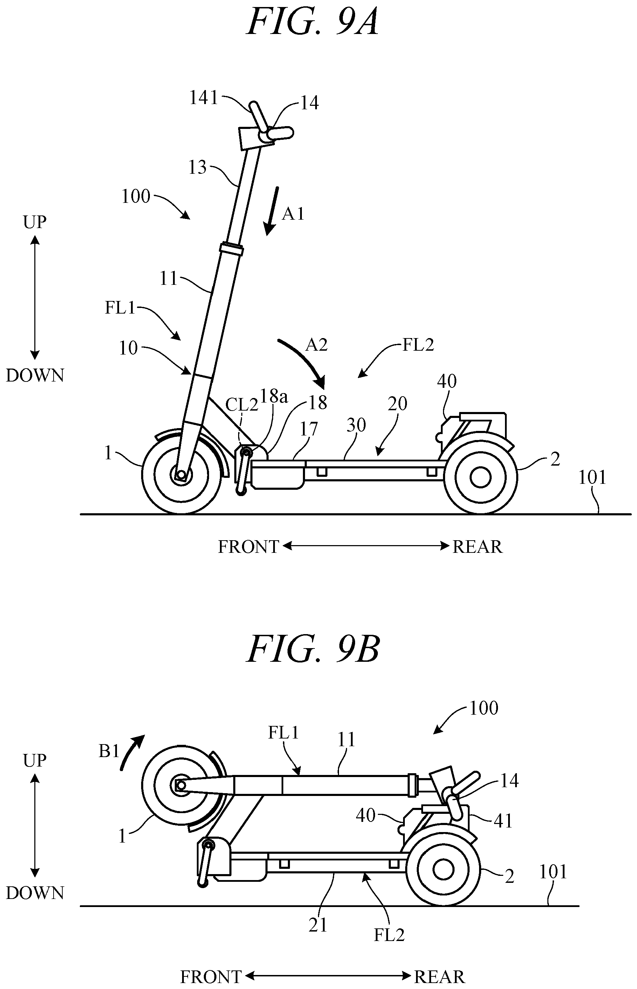

As described above, the vehicle 100 according to the present embodiment is configured so that the first frame FL1 is foldable relative to the second frame FL2 with the shaft portion 18a (the axial line CL2) of the bracket 18 of the front frame 10 as the center. FIGs. 9A to 9D are diagrams illustrating an example of a posture change from a traveling posture of the vehicle 100. The front-rear direction, the left-right direction, and the up-down direction in FIGs. 9A to 9C conform to the directions illustrated in FIGs. 1 and 2. A folded posture is included in the non-traveling posture of the vehicle 100.

When folding the vehicle 100 from the traveling posture, first, as indicated by an arrow A1 in FIG. 9A, the locking mechanism of the handlebar shaft 13 is released to retract the handlebar shaft 13 into the vertical pipe 11 to the maximum. Next, the locking mechanism of the bracket 18 is released, and the first frame FL1 is rotated rearward around the axial line CL2 with respect to the second frame FL2, as indicated by an arrow A2. Consequently, the vehicle 100 is folded as illustrated in Fig. 9B. In the folded posture in which the first frame FL1 has rotated rearward to the maximum, the handlebar 14 abuts the upper surface of the top wall of the holder 41. In this state, the vertical pipe 11 and the main frame 21 are substantially parallel to each other, and the battery 40 is disposed between the front and rear frames 10 and 20.

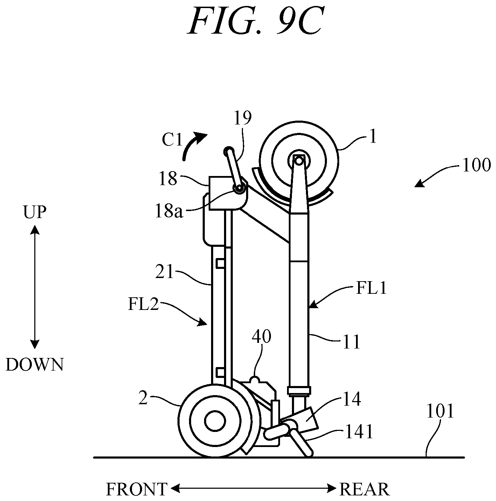

Furthermore, as indicated by an arrow B1 in FIG. 9B, the front wheel 1 is lifted upward with the rear wheels 2 as a fulcrum. Accordingly, as illustrated in FIG. 9C, the main frame 21 stands up, so that the vehicle 100 can be made to stand up. In this situation, the pair of left and right rear wheels 2 and a pair of left and right protrusion portions 141 provided on the handlebar 14 make contact with the road surface 101. Accordingly, the vehicle 100 is capable of stably standing by itself on at least three points (for example, four points). The bracket 18 is provided with a handle 19 so as to be rotatable coaxially with the shaft portion 18a.

When carrying the vehicle 100 from the state of FIG. 9C, the handle 19 is rotated upward as indicated by an arrow C1 in FIG. 9C, and the user PS grips the handle 19. In such a state, as illustrated in FIG. 9D, the vehicle 100 is inclined forward with the rear wheels 2 as a fulcrum. Thus, it becomes possible to easily carry the vehicle 100, while rolling the rear wheels 2 on the road surface 101. Here, since the heavy battery 40 which is a heavy object is disposed below the step 30, more specifically, between the left and right rear wheels 2, the center of gravity position P1 of the vehicle 100 is low and is positioned vertically above the grounding points P0 of the rear wheels 2. Therefore, the moment of the vehicle 100 with the grounding points P0 as a fulcrum is reduced, the vehicle 100 can be supported by a small force during transportation, and the transportability of the vehicle 100 is improved.

In the carried posture of FIG. 9D, the handlebar 14 abuts the holder 41. Accordingly, it is possible to prevent the battery 40 from being damaged by a collision with an obstacle. In addition, in the carried posture, the battery 40 is in an upright state, and the opening 41a of the holder 41 is directed upward. Therefore, even though the vehicle 100 rattles while being carried because of unevenness or the like on the road surface 101, it is possible to prevent the battery 40 from dropping off from the holder 41. In the carried posture, since the terminal 43 located on the lower end portion of the battery 40 is connected with the terminal of the holder 41, the gravity of the battery 40 works on the terminal 43. As a result, the terminals are stably connected with each other, and wear of the terminals can be suppressed.

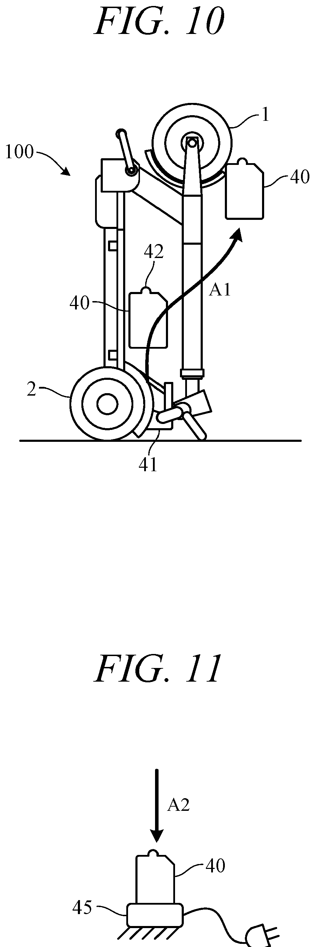

FIG. 10 is a diagram illustrating an example of a posture of the vehicle 100 while being stored. As illustrated in FIG. 10, the vehicle 100 is stored in an upright posture. In this state, the handle 42 of the battery 40 is gripped, and the battery 40 is lifted upward and removed from the holder 41 as indicated by an arrow A1 in FIG. 10. Next, as indicated by an arrow A2 in FIG. 11, the battery 40 is connected to a charger 45 outside the vehicle 100, and is then charged. The battery 40 may be charged in a state of being mounted on the vehicle 100.

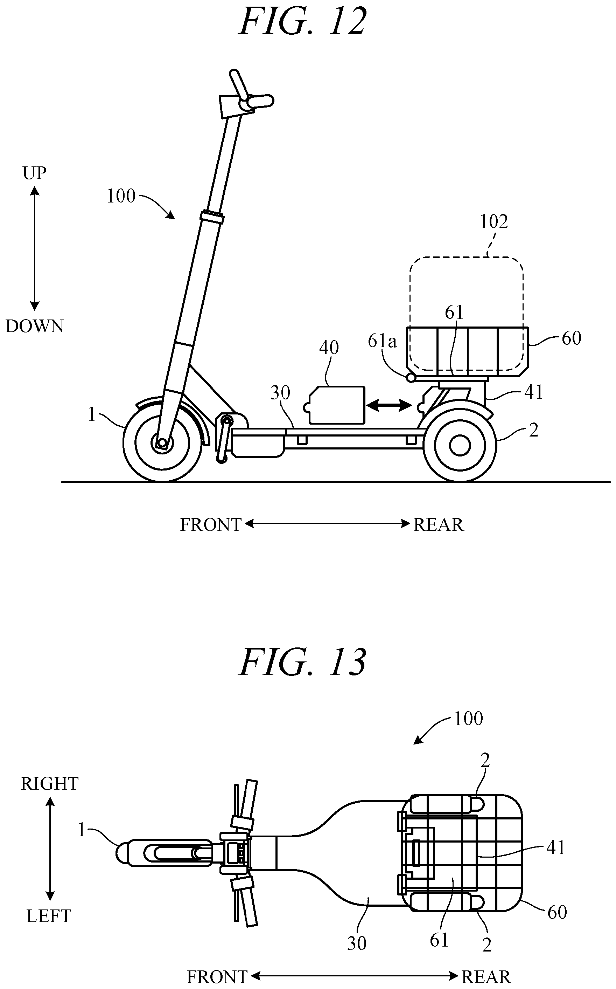

It is possible to provide a cargo bed on the vehicle 100 according to the present embodiment. FIGs. 12 and 13 are a side view and a plan view illustrating an overall configuration of the vehicle 100 including a cargo bed 60. As illustrated in FIGs. 12 and 13, a plate 61 having a substantially rectangular shape in a plan view is fixed to the upper surface of the holder 41, and the cargo bed 60 is mounted on the plate 61. The cargo bed 60 includes, for example, a front surface, a rear surface, and left and right side surfaces that are formed in a lattice shape, and the upper side is opened. A piece of baggage 102 (a dotted line in FIG. 12) is accommodated in the cargo bed 60 through such an opening. The provision of the cargo bed 60 above the holder 41 in this manner, as illustrated in FIG. 12, enables the battery 40 to be easily attached to and detached from the holder 41 without interfering with the cargo bed 60. The cargo bed 60 is rotatably provided at a front end portion of the plate 61 via a hinge portion 61a extending in the left-right direction. A locking mechanism may be provided for the cargo bed 60 on either the hinge portion 61a or the plate 61. Accordingly, the cargo bed 60 can be suppressed from moving with respect to the vehicle body while traveling, and thus the piece of baggage can be mounted in a more stable manner.

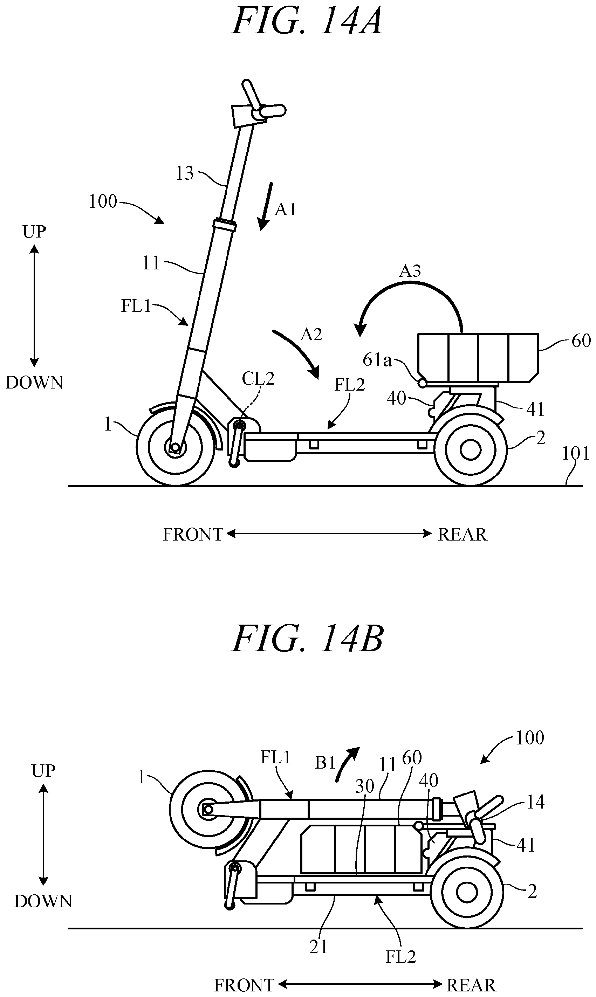

FIGs. 14A to 14C are diagrams illustrating an example of a posture change from a traveling posture of the vehicle 100 including the cargo bed 60. The front-rear direction and the up-down direction in FIGs. 14A to 14C conform to the directions illustrated in FIGs. 12 and 13. When folding the vehicle 100 including the cargo bed 60 from the traveling posture, first, as indicated by an arrow A1 in FIG. 14A, the locking mechanism of the handlebar shaft 13 is released to retract the handlebar shaft 13 into the vertical pipe 11 to the maximum. Next, in a case where either the hinge portion 61a or the plate 61 has the locking mechanism, after the lock is released, the cargo bed 60 is rotated forward with the hinge portion 61a as a fulcrum as indicated by an arrow A3. Furthermore, the locking mechanism of the bracket 18 is released, and the first frame FL1 is rotated rearward around the shaft portion 18a (the axial line CL2) with respect to the second frame FL2 as indicated by an arrow A2.

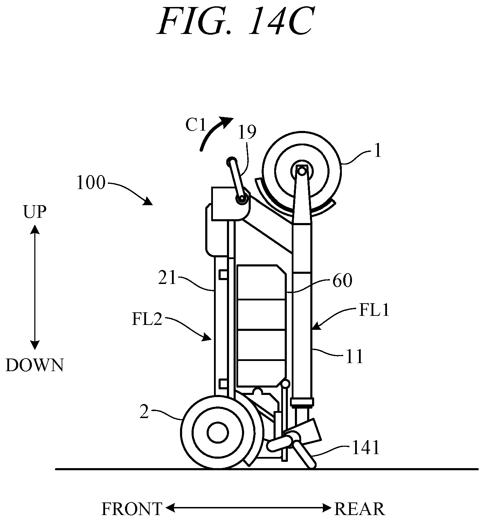

Consequently, as illustrated in FIG. 14B, the vehicle 100 is folded in a state in which the cargo bed 60 is disposed above the step 30. In the folded posture in which the first frame FL1 has rotated rearward to the maximum, the handlebar 14 abuts the upper surface of the top wall of the holder 41. In this state, the vertical pipe 11 and the main frame 21 are substantially parallel to each other, and the battery 40 is disposed between the front and rear frames 10 and 20. Furthermore, as indicated by an arrow B1 in FIG. 14B, the front wheel 1 is lifted upward with the rear wheels 2 as a fulcrum. Accordingly, as illustrated in FIG. 14C, the main frame 21 stands up, so that the vehicle 100 can be made to stand up. Next, as indicated by an arrow C1 in FIG. 14C, after the handle 19 is rotated and raised, the vehicle 100 is carried by gripping the handle 19.

According to the present embodiment, the following operations and effects are achievable.
(1) The vehicle 100 according to the present embodiment includes: the front wheel 1 and the rear wheel 2; the step 30 which extends in the substantially horizontal direction between the front wheel 1 and the rear wheel 2, and on which the feet of an occupant are placed; the first frame FL1 which supports the front wheel 1 to be rotatable, and which includes the handlebar 14 disposed above the front wheel 1; the second frame FL2 which supports the rear wheel 2 to be rotatable, and which supports the step 30; the shaft portion 18a of the bracket 18 which connects the first frame FL1 to be rotatable in the up-down direction with respect to the second frame FL2; and the battery 40 disposed on a rear side of the step 30 (FIG. 1). Accordingly, when the vehicle 100 is folded and carried, the battery 40 is located in the vicinity of the rear wheel 2. Therefore, when the vehicle 100 is carried, the moment that works on the vehicle 100 because of the gravity of the battery 40 is small, and it becomes possible to easily carry the vehicle 100.
(2) The battery 40 is disposed between the pair of left and right rear wheels 2 (FIG. 2). This enables protection of the battery 40 from a collision with an obstacle, while the vehicle 100 is being carried.
(3) The vehicle 100 further includes the holder 41 which holds the battery 40 (Fig. 1). The holder 41 includes the upper surface 41b serving as a placement surface on which the battery 40 is mounted and which is formed on a substantially identical plane to the upper surface of the step 30 (FIG. 6). Consequently, after the battery 40 is mounted on the step 30, it becomes possible to insert the battery into the holder 41, while sliding on the step 30. Thus, attachment and detachment of the battery 40 to and from the holder 41 are facilitated.
(4) When the first frame FL1 is rotated toward the second frame FL2 via the shaft portion 18a, the handlebar 14 is configured to abut the holder 41 (FIG. 9B). Consequently, the battery 40 is surrounded by the handlebar 14, while the vehicle 100 is being carried, so that the battery 40 can be protected from an obstacle.
(5) The holder 41 forms the accommodation space in which the battery 40 is accommodated through the opening 41a on the front surface. Accordingly, since the opening 41a faces upward, while the vehicle 100 is being carried, the battery 40 can be prevented from dropping off. In addition, while the vehicle 100 is being carried, the gravity of the battery 40 works in a direction of connecting the terminal 43 of the battery 40 and the terminal of the holder 41, so that the connecting portion of the terminal 43 is suppressed from sliding, and the wear of the terminal 43 can be suppressed.
(6) The vehicle 100 further includes the cargo bed 60 disposed above the holder 41 (FIG. 12). This enables the piece of baggage 102 to be easily mounted on the vehicle 100 without hindering the insertion and removal of the battery 40.
(7) The cargo bed 60 is rotatably supported by the holder 41 via the hinge portion 61a at the front end portion of the holder 41 (FIG. 14A). Consequently, the vehicle 100 can be folded without interfering with the cargo bed 60, in a state in which the cargo bed 60 is rotated (FIG. 14B).
(8) The vehicle 100 further includes the swing portion 50 which supports the first frame FL1 to be swingable in the left-right direction with respect to the step 30 (FIG. 8). In such a vehicle 100, the battery 40, which is a heavy object, is disposed on a rear side of the step 30 in a non-swinging state, falling down of the vehicle 100 can be prevented, while swinging. In addition, the center of gravity in parking becomes low, and the vehicle 100 is less likely to overturn.

The above embodiments can be changed in various forms. Hereinafter, modified examples will be described. In the above embodiments, the first frame FL1 is configured on the front side of the bracket 18 integral with the base frame 17. However, the configuration of a first frame is not limited to the above one as long as it is configured so as to rotatably support the front wheel 1 and to have the handlebar 14 (a steering part) disposed above the front wheel 1. In the above embodiment, the second frame FL2 is configured on the rear side of the brackets 18. However, the configuration of a second frame is not limited to the above one as long as it is configured so as to rotatably support the rear wheels 2 and to support the steps 30.

Although in the above embodiment, the step 30 as a placement part is constituted by a single plate member, the placement part may be configured by a plurality of plate members. Although in the above embodiment, the first frame FL1 is vertically rotatably connected via the shaft portion 18a of the brackets 18 with respect to the second frame FL2, the configuration of a connecting portion is not limited to the above configuration. The connecting portion may be provided in the rear frame 20. In the above embodiment, the battery 40 is disposed between the left and right rear wheels 2. However, it may be disposed at another position as long as it is disposed behind the step. Although in the above embodiment, the swing portion 50 is disposed in front of the step 30, the swing portion 50 may be disposed behind the front end of the step 30. In the above embodiment, the holder 41 of the battery 40 is configured so that the opening 41a is formed on the front surface. However, the configuration of a holding part that holds the battery is not limited to the above configuration.

In the above embodiment, the vehicle 100 is configured to have a single front wheel 1 and a pair of left and right rear wheels 2. However, the vehicle can be configured to have a single front wheel and a single rear wheel, or a pair of front wheels and a single rear wheel. The single front wheel includes, for example, a pair of front wheels included in one position, that is, pair front wheels.

### REFERENCE SIGNS LIST

1 front wheel, 2 rear wheel, 14 handlebar, 18a shaft portion, 30 step, 40 battery, 41 holder, 50 swing portion, 60 cargo bed, 100 vehicle, FL1 first frame, FL2 second frame

## Claims

1. A foldable vehicle (100), comprising:
a front wheel (1) and rear wheels (2);
a placement part (30) extended in a substantially horizontal direction between the front wheel (1) and the rear wheels (2) so that feet of an occupant are placed thereon;
a first frame (FL1) rotatably supporting the front wheel (1), and including a steering part (14) arranged above the front wheel (1) and a vertical pipe (11) extending in an up-down direction in a traveling posture of the vehicle (100) and an inclined frame (12) extending rearward from a rear surface of a lower end portion of the vertical pipe (11);
a second frame (FL2) rotatably supporting the rear wheels (2) and supporting the placement part (30), and including a main frame (21) extending in a front-rear direction and a pair of front and rear lateral frames (22) and (23) extending in the left-right direction across the main frame (21); and a pair of left and right support frames (24) extending in the left-right direction from the rear end portion of the main frame (21) ;
a battery (40) disposed behind the placement part (30); the foldable vehicle **characterised by**
a connecting portion (18a) rotatably connecting the first frame (FL1) in the up-down direction relative to the second frame (FL2) behind the front wheel (1) so that a posture of the vehicle (100) is changeable from the traveling posture to a folded posture where the vertical pipe (11) and the main frame (21) are substantially parallel to each other and the battery (40) is disposed between the vertical frame (11) and the main frame (21);
and
a holding part (41) holding the battery (40), wherein
the rear wheels (2) are configured by a pair of left and right rear wheels (2, 2),
the battery (40) is disposed between the pair of left and right rear wheels (2, 2),
the holding part (41) includes a placement surface (41b) on which the battery (40) is mounted, and the placement surface (41b) is formed on a substantially same plane as an upper surface of the placement part (30), and
the holding part (41) forms an accommodation space in which the battery (40) is accommodated through an opening (41a) on a front surface of the holding part (41).

2. The foldable vehicle according to claim 1, wherein
the steering part (14) is configured so as to abut the holding part (4) when the first frame (FL1) is rotated toward the second frame (FL2) through the connecting portion (18a).

3. The foldable vehicle according to claim 1 or 2, further comprising
a cargo bed (60) disposed above the holding part (41).

4. The foldable vehicle according to claim 3, wherein
the cargo bed (60) is rotatably supported at a front end portion of the holding part (41).

5. The foldable vehicle according to any one of claims 1 to 4, further comprising
a swing portion (50) swingably supporting the first frame (FL1) in the left-right direction relative to the placement part (30).

## Patentansprüche

1. Klappbares Fahrzeug (100), welches aufweist:
ein Vorderrad (1) und Hinterräder (2);
ein Platzierungsteil (30), das sich in einer angenähert horizontalen Richtung zwischen dem Vorderrad (1) und den Hinterrädern (2) erstreckt, sodass Füße eines Fahrers darauf platziert werden;
einen ersten Rahmen (FL1), der das Vorderrad (1) drehbar trägt und ein Lenkteil (14) enthält, das über dem Vorderrad (1) angeordnet ist, sowie ein vertikales Rohr (11), das sich in einer Fahrstellung des Fahrzeugs (100) in Oben-Unten-Richtung erstreckt, sowie einen geneigten Rahmen (12), der sich von einer Rückseite eines unteren Endabschnitts des vertikalen Rohrs (11) nach hinten erstreckt;
einen zweiten Rahmen (FL2), der die Hinterräder (2) drehbar trägt und das Platzierungsteil (30) trägt und einen Hauptrahmen (21) enthält, der sich in einer Vorne-Hinten-Richtung erstreckt, sowie ein Paar von vorderen und hinteren seitlichen Rahmen (22) und (23), die sich in der Links-Rechts-Richtung über den Hauptrahmen (21) erstrecken; und ein Paar linker und rechter Tragrahmen (24), die sich in der Links-Rechts-Richtung von dem hinteren Ende des Hauptrahmens (21) erstrecken;
eine Batterie (40), die hinter dem Platzierungsteil (30) angeordnet ist;
wobei das klappbare Fahrzeug **gekennzeichnet ist durch** einen Verbindungsabschnitt (18a), der den ersten Rahmen (FL1) in der Oben-Unten-Richtung relativ zu dem zweiten Rahmen (FL2) hinter dem Vorderrad (1) drehbar verbindet, sodass eine Stellung des Fahrzeugs (100) von der Fahrstellung zu einer geklappten Stellung änderbar ist, in der das vertikale Rohr (11) und der Hauptrahmen (21) im Wesentlichen parallel zueinander sind und die Batterie (40) zwischen dem vertikalen Rahmen (11) und dem Hauptrahmen (21) angeordnet ist;
und
ein Halteteil (41), welches die Batterie (40) hält, wobei
die Hinterräder (2) durch ein Paar linker und rechter Hinterräder (2, 2) konfiguriert sind,
die Batterie (40) zwischen dem Paar linker und rechter Hinterräder (2, 2) angeordnet ist,
das Halteteil (41) eine Platzierungsfläche (41b) aufweist, auf der die Batterie (40) angebracht ist, und die Platzierungsfläche (41b) im Wesentlichen auf der gleichen Ebene wie eine obere Fläche des Platzierungsteils (30) ausgebildet ist, und
das Halteteil (41) einen Aufnahmeraum bildet, in dem die Batterie (40) durch eine Öffnung (41a) an einer Vorderseite des Halteteils (41) aufgenommen wird.

2. Das klappbare Fahrzeug nach Anspruch 1, wobei
das Lenkteil (14) konfiguriert ist, um sich auf dem Halteteil (41) abzustützen, wenn der erste Rahmen (FL1) durch den Verbindungsabschnitt (18a) zu dem zweiten Rahmen (FL2) gedreht wird.

3. Das klappbare Fahrzeug nach Anspruch 1 oder 2, das ferner
eine über dem Halteteil (41) angeordnete Gepäckablage (60) aufweist.

4. Das klappbare Fahrzeug nach Anspruch 3, wobei
Die Gepäckablage (60) an einem vorderen Endabschnitt des Halteteils (41) drehbar gelagert ist.

5. Das klappbare Fahrzeug nach einem der Ansprüche 1 bis 4, das ferner
einen Schwenkabschnitt (50) aufweist, der den ersten Rahmen (FL1) in der Links-Rechts-Richtung relativ zu dem Platzierungsteil (30) schwenkbar lagert.

## Revendications

1. Véhicule pliable (100), comportant :
une roue avant (1) et des roues arrière (2) ;
une partie de positionnement (30) étendue dans une direction sensiblement horizontale entre la roue avant (1) et les roues arrière (2) de sorte que les pieds d'un occupant soient placés sur celle-ci ;
un premier cadre (FL1) supportant en rotation la roue avant (1), et incluant une partie de direction (14) agencée au-dessus de la roue avant (1) et un tube vertical (11) s'étendant dans une direction haut-bas dans une position de déplacement du véhicule (100) et un cadre incliné (12) s'étendant vers l'arrière à partir d'une surface arrière d'une partie d'extrémité inférieure du tube vertical (11) ;
un deuxième cadre (FL2) supportant en rotation les roues arrière (2) et supportant la partie de positionnement (30), et incluant un cadre principal (21) s'étendant dans une direction avant-arrière et une paire de cadres latéraux avant et arrière (22) et (23) s'étendant dans la direction gauche-droite à travers le cadre principal (21) ; et une paire de cadres de support gauche et droit (24) s'étendant dans la direction gauche-droite à partir de la partie d'extrémité arrière du cadre principal (21) ;
une batterie (40) disposée derrière la partie de positionnement (30) ; le véhicule pliable étant **caractérisé par**
une partie de liaison (18a) reliant en rotation le premier cadre (FL1) dans la direction haut-bas par rapport au deuxième cadre (FL2) derrière la roue avant (1) de sorte qu'une position du véhicule (100) puisse passer de la position de déplacement à une position pliée où le tube vertical (11) et le cadre principal (21) sont sensiblement parallèles l'un à l'autre et la batterie (40) est disposée entre le cadre vertical (11) et le cadre principal (21) ;
et
une partie de maintien (41) maintenant la batterie (40), dans lequel
les roues arrière (2) sont configurées par une paire de roues arrière gauche et droite (2, 2),
la batterie (40) est disposée entre la paire de roues arrière gauche et droite (2, 2),
la partie de maintien (41) inclut une surface de positionnement (41b) sur laquelle la batterie (40) est montée, et la surface de positionnement (41b) est formée sur un plan sensiblement identique à une surface supérieure de la partie de positionnement (30), et
la partie de maintien (41) forme un espace de logement dans lequel la batterie (40) est logée à travers une ouverture (41a) sur une surface avant de la partie de maintien (41).

2. Véhicule pliable selon la revendication 1, dans lequel
la partie de direction (14) est configurée de façon à venir en butée contre la partie de maintien (4) lorsque le premier cadre (FL1) est tourné vers le deuxième cadre (FL2) par le biais de la partie de liaison (18a).

3. Véhicule pliable selon la revendication 1 ou 2, comportant en outre
une plateforme de chargement (60) disposée au-dessus de la partie de maintien (41).

4. Véhicule pliable selon la revendication 3, dans lequel
la plateforme de chargement (60) est supportée en rotation au niveau d'une partie d'extrémité avant de la partie de maintien (41).

5. Véhicule pliable selon l'une quelconque des revendications 1 à 4, comportant en outre
une partie pivotante (50) supportant de manière pivotante le premier cadre (FL1) dans la direction gauche-droite par rapport à la partie de positionnement (30).
